(19) **Europäisches Patentamt / European Patent Office / Office européen des brevets**

(11) **EP 1 944 873 A2**

(12) # EUROPEAN PATENT APPLICATION

(43) Date of publication:
**16.07.2008 Bulletin 2008/29**

(51) Int Cl.:
*H04B 1/16* (2006.01)

(21) Application number: **08000383.3**

(22) Date of filing: **10.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.01.2007 IL 18067307**

(71) Applicant: **Audiodent Israel Ltd.**
**84965 Omer (IL)**

(72) Inventor: **Leibmann, Vadim**
**Migdal HaEmek 23507 (IL)**

(74) Representative: **Jordan, Volker Otto Wilhelm et al**
**Weickmann & Weickmann**
**Patentanwälte**
**Postfach 860 820**
**81635 München (DE)**

(54) **Low power radio frequency receiver**

(57)    The invention relates to a low power radio frequency receiver which comprises: (a) an antenna for receiving a first radio frequency signal; (b) a radio frequency amplifier for amplifying the first radio frequency signal received by said antenna; (c) an oscillator for generating a second radio frequency signal having a predefined frequency and a predefined duty cycle to be mixed with said first radio frequency signal received by said antenna; (d) a mixer for mixing the first amplified radio frequency signal with second radio frequency signals and generating a third radio frequency signal; (e) an intermediate frequency filter for passing one or more intermediate frequencies of said third radio frequency signal and attenuating other frequencies of said third signal that are lower or higher than its cutoff frequencies, characterized in that it further comprises: (f) one or more switches for periodically and synchronously switching ON and OFF one or more of said radio frequency amplifier, said oscillator, and said mixer, said switches controlled by means of a control signal having a frequency that is higher than the frequency of data embedded within said first radio frequency signal; and (g) a control unit located within said radio frequency receiver for providing said control signal, wherein each of said switches is connected to a corresponding capacitor within said radio frequency amplifier, or oscillator, or mixer, said capacitor storing an operating point of said radio frequency amplifier, or oscillator, or mixer when said radio frequency amplifier, or oscillator, or mixer is switched OFF.

Fig. 2

# Description

## Field of the Invention

The present invention relates to radio frequency receivers. More particularly, the invention relates to a method and system for providing a low power radio frequency receiver (such as an FM or AM receiver) that significantly saves available power supply resources, such as a battery.

## Definitions, Acronyms and Abbreviations

Throughout this specification, the following definitions are employed:

**Frequency Modulation (FM):** is a form of modulation which represents information as variations in the instantaneous frequency of a carrier wave (contrast to Amplitude Modulation (AM), in which the amplitude of the carrier is varied while its frequency remains constant).

**IF (Intermediate Frequency) Amplifier:** is a device for converting a small intermediate frequency input signal into a larger intermediate frequency output signal.

**Intermediate Frequency Filter:** is a Band-pass filter that passes intermediate frequencies well, but attenuates (or reduces) other frequencies lower or higher than its predefined cutoff frequencies. The actual amount of attenuation for each frequency varies from filter to filter.

**Local Oscillator:** is a device that generates a signal which is beat against the signal of interest to mix it to a different frequency. The oscillator produces a signal, which is further inputted into the mixer along with the signal from the antenna, in order to effectively change the antenna signal by heterodyning with it for further producing, for example, the sum or difference of that signals, one of which should be shifted by said mixer to the intermediate frequency.

**Mixer:** is a circuit or device that receives at its input two different frequencies and outputs a mixture of signals at several frequencies.

**RF (Radio Frequency) Amplifier:** is a device for converting a small radio frequency input signal into a larger radio frequency output signal. Said RF Amplifier may amplify certain frequencies while attenuating other frequencies, providing filtering function.

**Transition Time:** is the time interval requered for an electronic unit/component to reach its stable state.

## Background of the Invention

One of the main constraints of a conventional portable communication system is a constraint of the power supply due to limited power resources (such as a battery, an accumulator, etc.). Usually, each communication system consists of a transmitter and a remote receiver. The remote receiver can be a portable radio device (e.g., FM receiver, AM receiver, TV (television) receiver, etc.). However, conventional portable receivers usually require significant power recourses, leading to the relatively fast battery exhaustment. Thus, the operating time of conventional portable receivers is limited due to the power supply constraints.

Conventional miniature FM receiver typically requires the current supply of about 2-5 [mA] (milliampere) and power supply of 1 to 3[V] (volt). According to several prior art solutions, the receiver power consumption can be decreased to about 1 [mA], for example as shown in the article of Armin Deiss et. al. titled "A Low Power 200 MHz Receiver for Wireless Hearing Aid Systems" that was presented on Symposium on VLSI Circuits Digest of Technical Papers in 2002, where the RF receiver has the current consumption of 0.667 [mA] and power supply of 2 [V]. However, this current consumption is still relatively large to use said RF receiver with portable power supply resources (e.g., a battery). Especially, this issue becomes critical when receiver size constraints require utilization of small and, in turn, limited power resources, such as miniature batteries and the like. By using such receivers within miniature commercial audio instruments, such as wireless hearing aid devices or music players, the challenge of providing a miniature low-power RF receiver is becoming more acute and commercially rewarding.

Furthermore, according to the prior art, for saving power supply resources when the receiver is not in use, the receiver can operate in a stand-by mode. However when in the stand-by mode, for starting operating in a normal mode the receiver and transmitter have to be synchronized, which involves requirement for a synchronization-controlling electronic circuitry, which in turn leads to the waste of available power supply resources. In addition, such synchronization may cause the temporary loss of received information.

Therefore, it is an object of the present invention to provide a low power radio frequency receiver, which significantly reduces the consumption of battery power.

It is another object of the present invention to provide a radio frequency receiver that can be externally controlled for optimizing its performance and setting the required operating mode (e.g., the stand-by or normal mode).

It is still another object of the present invention to provide a low power radio frequency receiver that can be used for different purposes, such as for hearing aid devices, earphones, etc.

It is a further object of the present invention to provide a low power radio frequency receiver in which the stand-by mode can be changed to the normal mode without the need of the receiver and transmitter to be synchronized.

It is still a further object of the present invention to provide a low power radio frequency receiver that can be implemented in a form of a miniature integrated circuit.

It is still a further object of the present invention to provide a method and system which is relatively inexpensive.

Other objects and advantages of the present invention will become apparent as the description proceeds.

## Summary of the Invention

Although the following description will be provided with a particular reference to an FM receiver, it will be appreciated by the skilled person that any type of radio frequency (RF) receiver (such as an AM receiver, etc.) will benefit from the present invention and is encompassed within it.

The present invention relates to a method and system for providing a low power radio frequency receiver (such as an FM or AM receiver) that significantly saves available power supply resources, such as a battery.

The low power radio frequency receiver comprises: (a) an antenna for receiving a first radio frequency signal; (b) a radio frequency amplifier for amplifying the first radio frequency signal received by said antenna; (c) an oscillator for generating a second radio frequency signal having a predefined frequency and a predefined duty cycle to be mixed with said first radio frequency signal received by said antenna; (d) a mixer for mixing the first amplified radio frequency signal with second radio frequency signals and generating a third radio frequency signal; (e) an intermediate frequency filter for passing one or more intermediate frequencies of said third radio frequency signal and attenuating other frequencies of said third signal that are lower or higher than its cutoff frequencies, characterized in that it further comprises: (f) one or more switches for periodically and synchronously switching ON and OFF one or more of said radio frequency amplifier, said oscillator, and said mixer, said switches controlled by means of a control signal having a frequency that is higher than the frequency of data embedded within said first radio frequency signal and (g) a control unit located within said radio frequency receiver for providing said control signal, wherein each of said switches is connected to a corresponding capacitor within said radio frequency amplifier, or oscillator, or mixer, said capacitor storing an operating point of said radio frequency amplifier, or oscillator, or mixer when said radio frequency amplifier, or oscillator, or mixer is switched OFF.

According to an embodiment of the present invention, the oscillator is a crystal oscillator, the crystal of said oscillator is further connected to a switch that is periodically switched ON and OFF for maintaining continuous vibrations of said crystal and storing within it the energy of said vibrations for continuously generating the second radio frequency signal substantially at the predefined radio frequency.

According to another embodiment of the present invention, the receiver further comprises a switch connected to an output of the mixer for periodically switching ON and OFF a capacitor further connected to said switch, said capacitor storing the last value of the third signal outputted from said mixer and storing the operating point of said mixer when said mixer is switched OFF, and said capacitor being synchronously switched ON and OFF with the switching one or more of the radio frequency amplifier, oscillator and mixer.

According to still another embodiment of the present invention, the control unit provides a power supply signal to one or more units within said receiver.

According to still another embodiment of the present invention, the frequency of the control signal is substantially equal to a frequency of the power supply signal.

According to still another embodiment of the present invention, a duty cycle of the control signal is substantially equal to a duty cycle of the power supply signal.

According to still another embodiment of the present invention, the receiver further comprises an intermediate frequency amplifier for amplifying a fourth radio frequency signal outputted by the intermediate frequency filter.

According to still another embodiment of the present invention, said intermediate frequency amplifier is connected to one or more switches for periodically and synchronously switching the intermediate frequency amplifier ON and OFF, said switches controlled by means of a control signal.

According to still another embodiment of the present invention, the receiver further comprises a clipper for clipping a fourth radio frequency signal outputted by the intermediate frequency filter or the intermediate frequency amplifier.

According to still another embodiment of the present invention, the receiver further comprises a demodulator for demodulating data contents from a fourth signal outputted by the intermediate frequency filter.

According to still another embodiment of the present invention, the receiver further comprises or is further connected to a speaker, into which the demodulated data signal is provided.

According to still another embodiment of the present invention, the demodulated data signal is an audio data signal.

According to a further embodiment of the present invention, the receiver is a unit of a hearing aid device.

According to still a further embodiment of the present invention, the receiver is a miniature integrated circuit.

According to still a further embodiment of the present invention, the receiver has normal and stand-by modes.

According to still a further embodiment of the present invention, the receiver is externally set to a normal or stand-by mode by receiving one or more mode-changing radio frequency signals from a transmitter.

According to still a further embodiment of the present invention, upon receipt of the one or more mode-changing radio frequency signals by means of the receiver, the control unit changes a duty cycle of the power supply and control signals.

According to still a further embodiment of the present invention, upon receipt of the one or more mode-changing radio frequency signals by means of the receiver, the control unit changes a frequency of the power supply and control signals.

According to still a further embodiment of the present invention, a duty cycle of the control and power supply signals are externally set by means of a user by sending to the receiver one or more corresponding radio frequency signals.

According to still a further embodiment of the present invention, the frequency of the control and power supply signals provided to the oscillator differs from the frequency of the control and power supply signals provided to other units within said receiver.

According to still a further embodiment of the present invention, a duty cycle of the control and power supply signals provided to the oscillator differs from a duty cycle of the control and power supply signals provided to other units within said receiver.

**Brief Description of the Drawings**

In the drawings:

- Fig. 1 is a schematic block diagram of a conventional FM receiver, according to the prior art;

- Fig. 2 is a schematic block diagram of an FM receiver, according to an embodiment of the present invention;

- Fig. 3 is a schematic illustration of a switched RF amplifier, according to an embodiment of the present invention;

- Fig. 4 is a schematic illustration of a crystal-equivalent electronic circuit of a switched Local Oscillator, according to an embodiment of the present invention;

- Fig. 5 is a schematic illustration of a switched Mixer, according to an embodiment of the present invention;

- Fig. 6 is a schematic illustration of normal mode and stand-by mode signals, according to an embodiment of the present invention; and

- Fig. 7A to Fig. 7C are schematic illustrations of sample input/output signals within an FM receiver, according to an embodiment of the present invention.

**Detailed Description of the Embodiments**

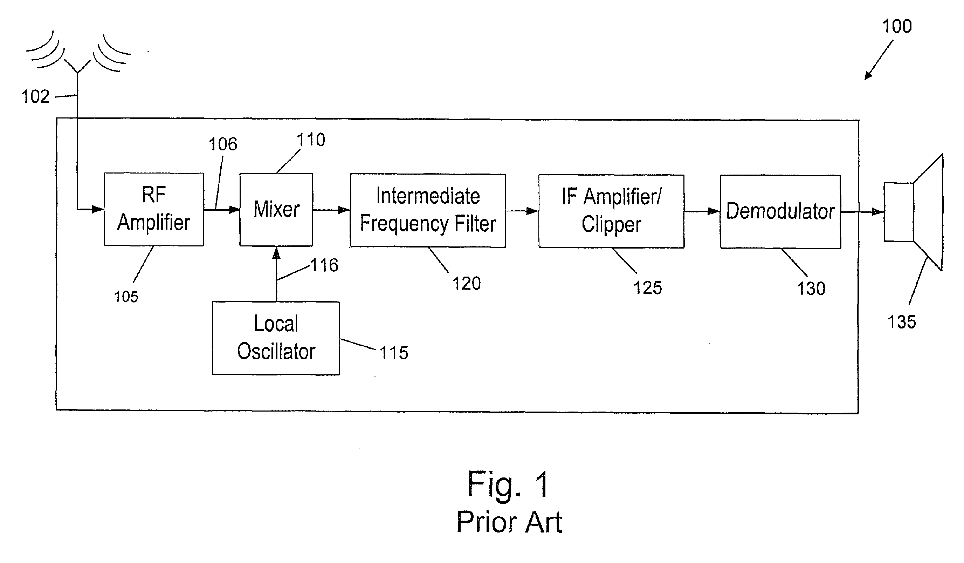

Fig. 1 is a schematic block diagram of a conventional FM receiver 100, according to the prior art. The receiver comprises: an RF (Radio-Frequency) amplifier 105 for amplifying the radio signal received by means of antenna 102; a Local Oscillator 115 for generating a signal with a predefined radio frequency to be mixed with the signal received by said antenna 102 to a different radio frequency; a Mixer 110 for mixing the signal received by said antenna 102 with the signal generated by said Local Oscillator 115; Intermediate Frequency (IF) filter 120 (Band-pass filter) for passing signals between the filter low and high cutoff frequencies , but attenuating other signals in frequencies lower or higher than its predefined cutoff frequencies; an IF amplifier/clipper 125 for amplifying the intermediate frequency signal received from said Intermediate Frequency filter 120; and a Demodulator 130 for demodulating the corresponding data contents (such as audio data, etc.) from the signal amlified by said IF amplifier/clipper 125 (the data contents that are embedded within the signal received by means of antenna 102). The output of Demodulator 130 can be connected to Speaker 135 for playing the demodulated audio data, said speaker provided within the FM receiver 100 or provided as an external unit connected to said FM receiver 100.

According to the prior art, RF amplifier 105, Mixer 110, Oscillator 115 and Intermediate Frequency Amplifier 125 are significant power supply consumers and therefore, there is a need to decrease the current consumption of these devices. Conventional miniature FM receiver typically requires the current supply of about 2-5 [mA] (milliampere) and a power supply of 1 [V] to 3[V]. According to several prior art solutions, the receiver power consumption can be decreased to about 1 [mA], as shown for example in the article of Armin Deiss et. al. titled "A Low Power 200 MHz Receiver for Wireless Hearing Aid Systems" that was presented on Symposium on VLSI Circuits Digest of Technical Papers in 2002, where the RF receiver has the current consumption of 0.667 [mA] with a power supply of 2[V]. However, this current consumption is still relatively large for using said RF receiver with portable power supply resources (e.g., a battery).

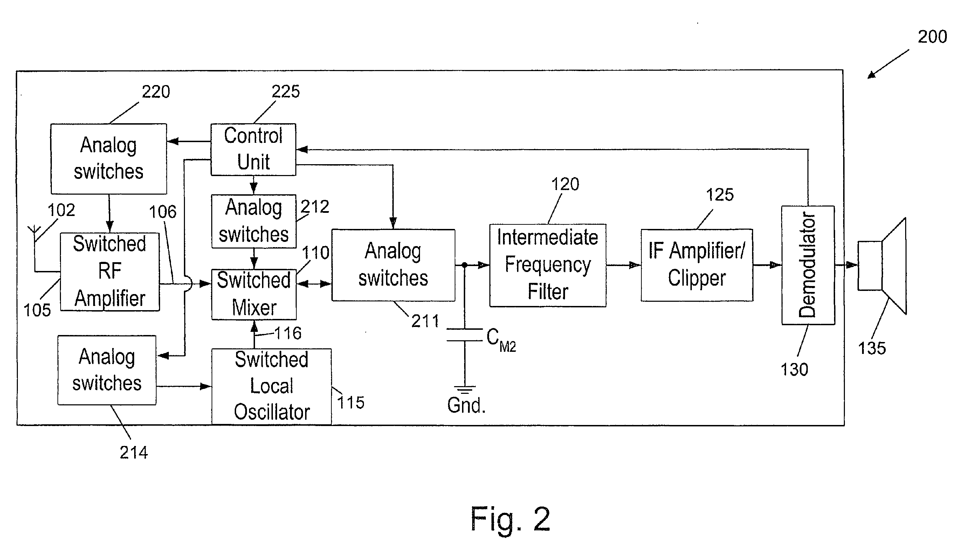

Fig. 2 is a schematic block diagram of an FM receiver 200, according to an embodiment of the present invention. FM Receiver 200 comprises: a RF (Radio-Frequency) amplifier 105 for amplifying the radio signal received by antenna 102, said RF amplifier 105 is switched by means of one or more analog switches 220, each of which is connected to one or more capacitors (not shown) of said RF amplifier 105 that are used for storing a current operating point (voltage value) of said RF amplifier 105; a Local Oscillator 115 for generating a signal with a predefined radio frequency to be mixed with the signal received by said antenna 102 to a different radio frequency, said Local Oscillator 115 switched by means of one or more analog switches 214, which is connected to a crystal of said Local Oscillator 115 for maintaining continuous vibrations of said crystal and storing the energy of said vibrations within said Local Oscillator 115, insuring by this way that the generated signal always has the (substantially) predefined radio frequency; a Mixer 110 for mixing the signal received by said antenna 102 with a signal generated by said Local Oscillator 115, said Mixer 110 switched by means of one or more analog switches 211, each of which connected to one or more capacitors (not shown) of said Mixer 110 for storing a current operating point (voltage value) of said Mixer 110; a capacitor $C_{M2}$ provided at the output of said Mixer 110 for storing the last value of a signal outputted from said Mixer 110 (in addition to storing the last operating point (voltage value) of said Mixer 110); an Intermediate Frequency (IF) filter 120 (Band-pass filter) for passing frequencies within the filter band pass well, but attenuating other frequencies lower or higher than its predefined bandpass; an IF amplifier/clipper 125 for amplifying the intermediate frequency signal received from said Intermediate Frequency filter 120; a Demodulator 130 for demodulating the data contents (such as audio data) from a signal amlified by said IF amplifier/clipper 125; and a Control Unit for providing a power supply signal to all components/units within said FM receiver 200 (such as RF amplifier 105, Oscillator 115, Mixer 110, etc.) and for switching said RF amplifier 105, Oscillator 115 and Mixer 110 by means of a control signal for saving available power supply resources.

According to an embodiment of the present invention, by utilizing analog switches (such as analog switches 211, 212, 214 and 220), one or more electronic components/units within FM Receiver 200 are periodically and synchronously switched ON and OFF to save energy of the power supply (e.g., a battery). For example, RF amplifier 105 can be periodically switched ON for a predefined period of time (e.g., 1.5 [$\mu$sec] (microseconds)), and then switched OFF for another period of time (e.g., additional 1.5 [$\mu$sec]). Each of analog switches 220 is connected to a corresponding capacitor of switched RF amplifier 105 for storing its last operating point. When the switch is ON (closed), then RF amplifier 105 operates in its normal state, amplifying an RF signal received by means of antenna 102 and the corresponding capacitor is shorten to the Ground (Gnd.) and is charged to a voltage level corresponding to the amplifier operating point. On the other hand, when the switch is OFF (open), then RF amplifier 105 is in its non-operating state and said capacitor is disconnected, storing the last operating point (the last voltage value) of said RF amplifier 105. Thus, when the switch is switched ON again, the capacitor, which was not discharged during the period of time when the switch was open (switched OFF), holds (substantially) the voltage of the last operating point and as a result, RF amplifier 105 resumes its operation from the last operating point. In this way, power supply energy is saved, prolonging the receiver operation without the need to replace or recharge the battery. The reason for the energy saving is that RF amplifier components (a transistor, capacitors, resistors, etc.) do not consume power resources when the switches are open (OFF), and in addition the transition time between non-stable and stable state is decreased, allowing relatively fast recovery from the non-operational state. Similarly to analog switches 220, each of analog switches 212 is connected to one or more corresponding capacitors within Mixer 110, which are used for storing the last operating point of said Mixer 110. Similarly to RF amplifier 105, electronic components of Mixer 110 (such as a transistor, capacitors, resistors, etc.) do not consume energy from the power resources when switch 212 is open (switched OFF), and thus the energy of the power supply is saved, prolonging FM receiver 200 operation without the need to replace or recharge a battery.

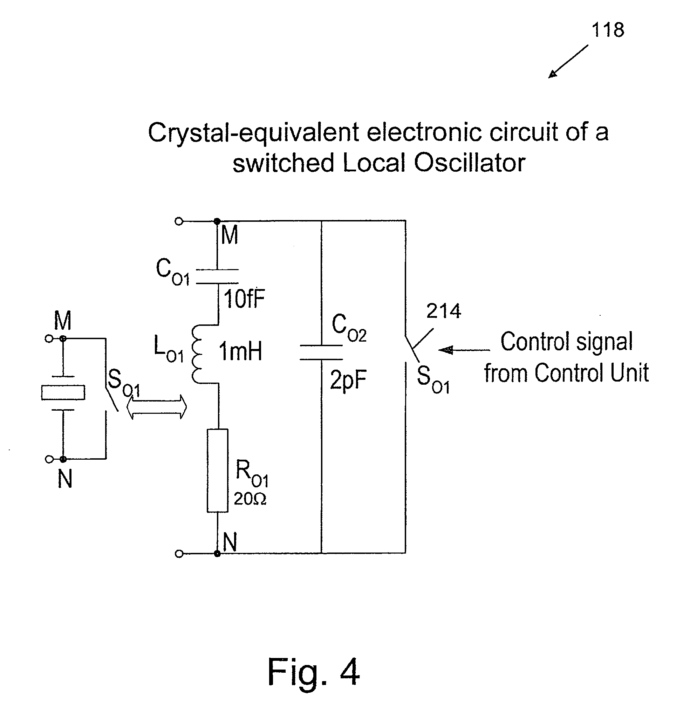

According to an embodiment of the present invention, analog switch 214 is connected to a crystal of switched local oscillator 115 for maintaining its continuous vibrations and storing the energy of said vibrations within said Local Oscillator 115, insuring by this way that the generated signal always has the predefined (substantially) radio frequency. This is done by shortening a contour (tank) of said crystal (when the switch is closed, point N is shorten to point M (Fig. 4)). As further shown on Fig. 4, the crystal can be represented by an equivalent circuit, comprising inductor $L_{O1}$, capacitor $C_{O1}$ and resistor Roi connected in series. The stored energy of vibrations causes switched Local Oscillator 115 to maintain the generated signal to substantially have the predefined frequency (e.g., 160 MHz (MegaHertz)), and decreases the transition time of said switched Local Oscillator 115 to reach its stable state when analog switch 214 is open (switched OFF). By this way electronic components of Local Oscillator 115 (such as a transistor, capacitors, resistors, etc.) do not consume power resources when switch 214 is closed (switched ON), maintaining the predefined frequency and amplitude of the signal generated by said Local Oscillator 115, and thus energy of the power supply is saved, prolonging FM receiver 200 operation without the need to replace or recharge a battery, and without affecting the FM receiver performance.

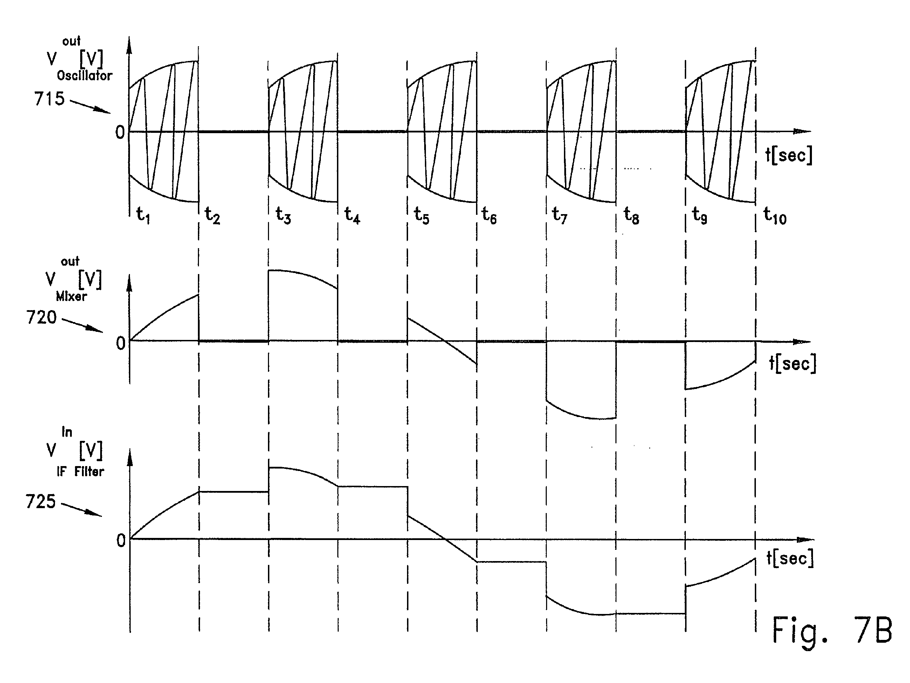

According to another embodiment of the present invention, the output of Mixer 110 is further connected to analog switch 211 which is in turn connected to capacitor $C_{M2}$, said capacitor, in addition to storing the last operating point (voltage value) of said Mixer 110, stores the last value of a signal outputted from said Mixer 110. By this way, when analog switch 211 is open (switched OFF), the signal $V_{IF\,Filter}^{In}[V]$ inputted to IF filter 120 is kept at its last value, as shown on graph 725 on Fig. 7B. For example, if at time period $t_2$ the amplitude of signal $V_{IF\,Filter}^{In}[V]$ is 1 Volt, then from $t_2$ to $t_3$, the amplitude of said signal $V_{IF\,Filter}^{In}[V]$ remains substantially 1 Volt due to providing said capacitor $C_{M2}$. By this way, similarly to RF amplifier 105, Mixer 110 and Local Oscillator 115, capacitor $C_{M2}$ does not consume energy from the power resources when switch 211 is open, and thus energy of the power supply resources is saved, prolonging FM receiver 200 operation without the need to replace or recharge a battery.

Control Unit 225 generates a power supply signal in a form of a train of pulses (with a predefined frequency and a predefined duty cycle) and provides it to electronic units/components within FM receiver 200 (e.g., RF Amplifier 105, Mixer 110, IF Amplifier 125, etc.). In addition, Control Unit 225 periodically and synchronously switches RF Amplifier 105, Mixer 110, Local Oscillator 115 and capacitor $C_{M2}$ ON and OFF by means of a control signal having a predefined frequency. The frequency and duty cycle of said power supply signals is substantially equivalent to the frequency and duty cycle of said control signal. Also, the frequency of the power supply signal and control signal is higher than the frequency of the transmitted data (such as the audio data), embedded within the signal received by means of antenna 102 (the transmitted data can be further demodulated by means of Demodulator 130). Further, the frequency of the power supply signal and control signal is higher than the intermediate frequency (e.g., two times higher). For example, for an audio data signal within the frequency range between 200 Hz and 8 KHz, the intermediate frequency may be 40 KHz and the power supply signal and control signal frequency may be 300 KHz.

According to an embodiment of the present invention, FM receiver 200 may operate in normal and stand-by modes. When operating in normal mode, for example, the switching frequency may be 300 KHz, and when operating in stand-by mode, the switching frequency may also be 300 KHz or another (e.g., 100 KHz when the intermediate frequency is, for example, 40 KHz).

In the normal mode, all analog switches (such as analog switches 211, 212, 214 and 220) may be switched by means of Control Unit 225 with a frequency of 300 KHz, for example, and each switching signal may have a duty cycle of 0.5 (50%). In the stand-by mode, the switches may be switched with a signal having a lower frequency (e.g. 150kHz) and/or lower duty cycle (e.g. 0.1 (10%) or 0.2 (20%)). Thus, in the normal mode, RF Amplifier 105, Mixer 110 and Local Oscillator 115 operate about 50 percent of the time, and in the stand-by mode only 10 or 20 percent. Therefore, in the stand-by mode, more energy is saved. It should be noted that when operating in the stand-by mode, RF Amplifier 105, Mixer 110 and Local Oscillator 115 still operate with a predefined duty cycle (although it can be relatively small) in order to be able to receive, when required, a corresponding signal from said Control Unit 225 to start operating in the normal mode.

According to an embodiment of the present invention, Control Unit 225 may be externally controlled, enabling a user to define when to operate in the normal mode, and when to operate in the stand-by mode. For setting Control Unit 225 to the normal mode or stand-by mode, the user sends a corresponding FM mode-changing signal by means of his transmitter (not shown). Then, the signal is received by means of antenna 102. The signal may have, for example, a low frequency of 100 or 150 Hz that does not interfere with audio signals (e.g., human speech, etc.) that are also received by said antenna 102, said signals are in the range of between 200 Hz and 8 KHz (KiloHertz). The mode-changing signal is determined by means of Demodulator 130 and the corresponding command is sent to Control Unit 225 from said Demodulator 130, instructing Control Unit 225 to change the operating mode. In this way, the user can set FM receiver 200 to the stand-by mode in order to save the battery energy.

According to another embodiment of the present invention, a user may externally control operation of Control Unit 225 by defining the duty cycle of the power supply and control signals. The larger the duty cycle is, the higher is the power consumption, and the better is the quality of the audio signal outputted to Speaker 135 (that is demodulated by Demodulator 130). Thus, for example, when in an opera concert, the user may increase the duty cycle of the power supply and control signals to 0.8 (80%) by sending to FM receiver 200 a corresponding signal having a predefined radio frequency (e.g., 110 Hz).

It should be noted that according to an embodiment of the present invention, the central frequency of IF Filter 120 may be, for example, in a range from 25 KHz to 75 KHz (such as 50 KHz). On the other hand, the frequency range of an audio signal outputted by means of Demodulator 130 to Speaker 135 may be, for example, from 200 Hz to 8 KHz.

Further, it should be noted that the providing of analog switches 214 for switching Local Oscillator 115, does not substantially affect the output frequency of the signal 116 from said Local Oscillator 115 to Mixer 110. Still it should further be noted that the power supply and switching signals from Control Unit 225 should preferably have a frequency which is at least twice than the higher cutoff frequency of IF filter 120. Thus, when switching ON and OFF said RF Amplifier 105, Mixer 110, Local Oscillator 115 and capacitor $C_{M2}$, there is no loss of audio information from the signal received by means of antenna 102. Also, it should be noted that additional capacitors and filters may be further provided within one or more units of FM receiver 200 for: (a) decreasing noise that may be added to the audio signal due to said switching; and (b) ensuring substantially clean and smooth output audio signal from Speaker 135.

According to an embodiment of the present invention, RF receiver 200 is used in hearing aid devices, such as in a bone conduction hearing aid device such as disclosed in US 5,447,489.

According to another embodiment of the present invention, instead of analog switches, digital switches may be used or any other electronic components/units that function like switches.

According to still another embodiment of the present invention, FM receiver 200 is implemented by a miniature integrated circuit, such as an electronic chip.

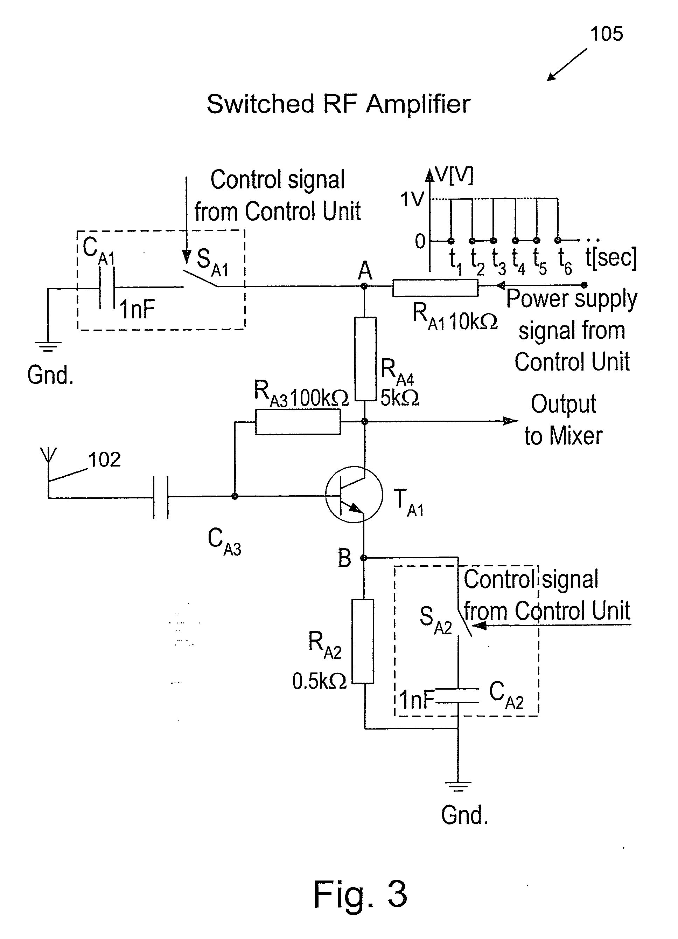

Fig. 3 is a schematic illustration of switched RF amplifier 105, according to an embodiment of the present invention. RF amplifier 105 is a conventional amplifier to which analog switches $S_{A1}$ and $S_{A2}$ are connected, each of said switches is controlled by means of Control Unit 225 (Fig. 2) and connected to capacitors $C_{A1}$ and $C_{A2}$, respectively. Capacitors $C_{A1}$ and $C_{A2}$ store the operating point (voltage value) of RF amplifier 105 just before switches $S_{A1}$ and $S_{A2}$ are switched OFF. RF amplifier 105 is continuously fed by a power supply signal from Control Unit 225, said signal having a form of a train of pulses with a predefined frequency and with a predefined duty cycle. The frequency of said train of pulses is synchronized and substantially equal to the frequency of switching ON and OFF said switches $S_{A1}$ and $S_{A2}$, and it is, for example, 300 KHz when operating in the normal mode (with duty cycle of 0.5 (50%)), and also 300 KHz when operating in the stand-by mode (with duty cycle of 0.1-0.2 (10%-20%)).

At the time period between $t_1$ and $t_2$, the amplitude of the power supply signal from Control Unit 225 is not zero (it can be, for example, 1 Volt [V]). At such period of time, switches $S_{A1}$ and $S_{A2}$ are closed, capacitors $C_{A1}$ and $C_{A2}$ are shorten to "Ground" (Gnd.) and are charged, and RF amplifier 105 operates in its conventional state, amplifying the radio signal received from antenna 102 (Fig. 2) (the BJT transistor (Bipolar Junction Transistor) $T_{A1}$ is operational and components of said RF amplifier 105 are fed by said power supply signal). On the other hand, at the time period between $t_2$ and $t_3$, the amplitude of the power supply signal is substantially zero. At said period of time, switches $S_{A1}$ and $S_{A2}$ are open, capacitors $C_{A1}$ and $C_{A2}$ are disconnected from the rest of the RF amplifier electronic components, and RF amplifier 105 does not amplify the signal from said antenna 102 (BJT transistor $T_{A1}$ is non-operational and as a result, RF amplifier 105 is in its non-operative state). Capacitors $C_{A1}$ and $C_{A2}$ keep (substantially) the last operating point of RF amplifier 105 (the last voltage value at points A and B, respectively, that is determined just before opening said switches $S_{A1}$ and $S_{A2}$). At the time period between $t_2$ and $t_3$, the voltage value at points A and B is substantially zero. Further, at the time period between $t_3$ and $t_4$, the amplitude of the power supply signal is not zero and switches $S_{A1}$ and $S_{A2}$ are closed. Thus, RF amplifier 105 recovers from its previous non-operative state in a relatively fast manner due to the fact that capacitors $C_{A1}$ and $C_{A2}$ are already charged to the operating point voltage.

It should be noted that, for example, the value of each capacitor $C_{A1}$ and $C_{A2}$, may be 1 [nF] (nanoFarad)]; the value of $R_{A1}$ may be 10 [KΩ]; the value of $R_{A2}$ may be 0.5 [KΩ]; the value of $R_{A3}$ may be 100 [KΩ]; and the value of $R_{A4}$ may be 5 [KΩ].

In addition, it should be noted that if utilizing only one of switches $SA_1$ or $S_{A2}$, the energy of the power supply resources is still saved. However, the amplifier output signal $V_{Amplifier}^{out}[V]$ may be affected (can be distorted).

Fig. 4 is a schematic illustration of a crystal-equivalent electronic circuit 118 of a switched Local Oscillator 115 (Fig. 2), according to an embodiment of the present invention. Capacitor $C_{O1}$, inductor $L_{O1}$ and resistor $R_{O1}$ are connected in series, and represent an equivalent electronic circuit of a crystal of a conventional local oscillator that generates a high-frequency signal. Capacitor $C_{O2}$ is a parasitic capacitor that may be, for example, 2 pF [picoFarad] . Resistor $R_{O1}$ may be, for example, 20 Ohm [Ω], capacitor $C_{O1}$ may be 10 [fF] (femtoFarad) and inductor $L_{O1}$ can be 1 [mH] (milliHenry). The Quality factor Q of said oscillator may be, for example, 50,000, and the output frequency can be, for example, 160 MHz (MegaHertz). Analog switch $S_{O1}$ is connected to said crystal-equivalent electronic circuit 118 for maintaining its continuous vibrations and storing the energy of vibrations within Local Oscillator 115 by shortening a contour of said crystal (when the switch is closed, point N is shorten to point M). Thus, it is insured that the signal generated by said Local Oscillator 115 always has (substantially) a predefined frequency, decreasing by this way the transition time of the crystal of Local Oscillator 115 to reach its stable state (at the time period when analog switch $S_{O1}$ is open (i.e., switched OFF)).

At the time period between $t_1$ and $t_2$ (Fig. 3), when the power supply signal is not zero, switch $S_{O1}$ is open and said crystal-equivalent electronic circuit generates a frequency signal that is outputted to Mixer 110 (Fig. 2). At the time period between $t_2$ and $t_3$ (Fig. 3), when the power supply signal is substantially zero, switch $S_{O1}$ is closed and one end of said crystal-equivalent electronic circuit 118 is shorten to another (point M is shorten to point N). Thus, the signal generated by said crystal-equivalent electronic circuit 118 is locked within a path defined by capacitor $C_{O1}$, inductor $L_{O1}$, resistor $R_{O1}$ and switch $S_{O1}$, and as a result said signal is not outputted to Mixer 110. The energy is transferred from inductor $L_{O1}$ to capacitor $C_{O1}$ that leads to the relatively fast recovery (i.e., to the relatively short transition time of Local Oscillator 115) at the time period between $t_3$ and $t_4$, when said oscillator is switched ON again.

According to another embodiment of the present invention, Local Oscillator 115 receives power supply and switching signals from Control Unit 225 with a frequency and/or duty cycle that differ from the same signals that are provided to other electronic units of FM receiver 200 (Fig. 2). The duty cycle and/or frequency of the power supply and switching signals provided to Local Oscillator 115 may be selected according to Quality factor (Q) of a crystal of said Local Oscillator 115.

It should be noted that similar to RF amplifier 105 and Mixer 110, each capacitor within Local Oscillator 115 having a relatively large value (e.g., 1 [nF] (nanoFarad)) may be switched for saving energy of the power supply resources and decreasing the transition time of said Local Oscillator 115.

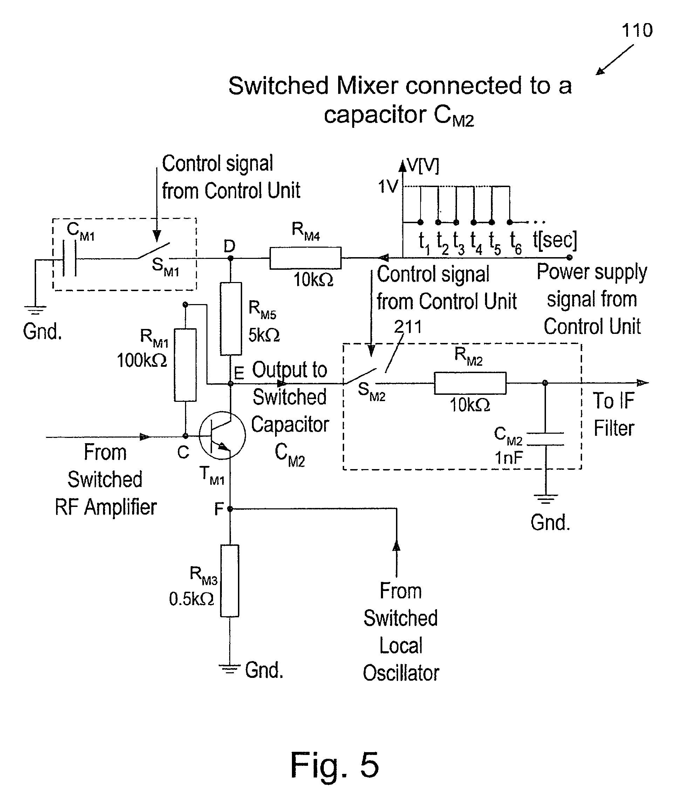

Fig. 5 is a schematic illustration of switched Mixer 110, according to an embodiment of the present invention. At the time period between $t_1$ and $t_2$, the amplitude of the power supply signal from Control Unit 225 (Fig. 2) is not zero (it can be, for example, 1 Volt [V]). At such period of time, switch $S_{M1}$ is closed and capacitor $C_{M1}$ is shorten to "Ground" (Gnd.). At the time period between $t_2$ t and $t_3$, the amplitude of the power supply signal is substantially zero. At such period of time, switch $S_{M1}$ is open, capacitor $C_{M1}$ is disconnected, and therefore Mixer 110 is in its non-operative state (transistor $T_{M1}$ is not operational because the voltage value of a signal received from Local Oscillator at point F is also substantially zero). Capacitor $C_{M1}$ keeps the last operating point of Mixer 110 (the voltage value at point D that is determined before opening switch $S_{M1}$). At the time period between $t_2$ and $t_3$, the voltage value at point D is substantially zero. Further, at the time period between $t_3$ and $t_4$, the amplitude of the power supply signal is not zero and switch $S_{M1}$ is closed. Thus, Mixer 110 recovers from its previous non-operative state in a relatively fast manner due to the fact that capacitor $C_{M1}$ is already charged to the operating point voltage. (There is no need to recharge it again).

Still similarly to the described above, at the time period between $t_1$ and $t_2$, switch $S_{M2}$ (211) is closed and capacitor $C_{M2}$ is shorten to "Ground" (Gnd.). At the time period between $t_2$ and $t_3$, the amplitude of the power supply signal is substantially zero. At such period of time, switch $S_{M2}$ is open, capacitor $C_{M2}$ is disconnected (Mixer 110 is in its non-operative state because transistor $T_{M1}$ is not operational). Capacitor $C_{M2}$ in addition to storing the last operating point (voltage value) of said Mixer 110, stores the last value of a signal outputted from said Mixer 110. In this way, when analog switch $S_{M2}$ is open (switched OFF), the signal $V_{IF\ Filter}^{In}[V]$ inputted to IF filter 120 is kept at its last value, as shown on Fig. 7B. For example, if at time period $t_2$ the amplitude of signal $V_{IF\ Filter}^{In}[V]$ is 1 Volt, then from $t_2$ to $t_3$ when the voltage value at point E is substantially zero, the amplitude of said signal $V_{IF\ Filter}^{In}[V]$ remains substantially 1 Volt due to providing said capacitor $C_{M2}$. Further, at the time period between $t_3$ and $t_4$, the amplitude of the power supply signal is not zero and switch $S_{M2}$ is closed.

It should be noted that the value of each capacitor, $C_{M1}$ and $C_{M2}$, may be, for example, 1 [nF] (nanoFarad)]; the value of $R_{M1}$ may be 100 [KΩ]; the value of $R_{M2}$ may be 10 [KΩ]; the value of $R_{M3}$ may be 0.5 [KΩ]; the value of $R_{M4}$ may be 10 [KΩ]; and the value of $R_{M5}$ may be 5 [KΩ].

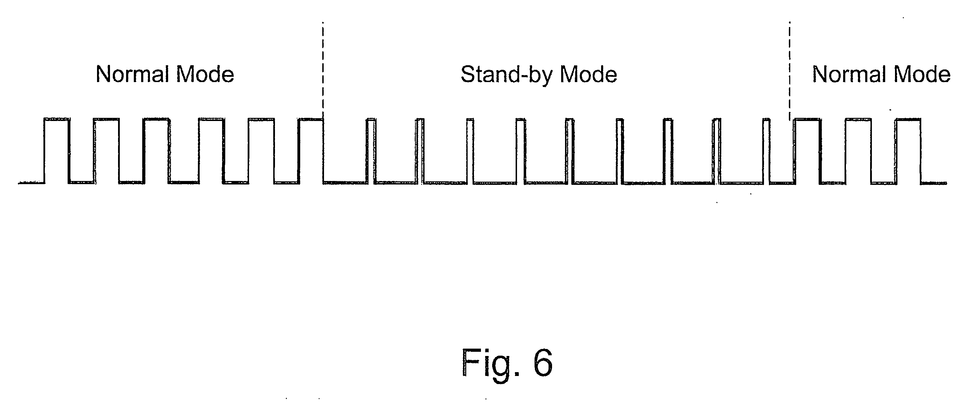

Fig. 6 is a schematic illustration of normal mode and stand-by mode control signals, according to an embodiment of the present invention. In the normal mode, all analog switches can be switched by means of Control Unit 225 (Fig. 2) with a signal having a frequency of 300 KHz, for example, and each switching signal may have a duty cycle of 0.5 (50%). In the stand-by mode, the switches may also be switched by a signal having a frequency of 300 KHz, each signal having a duty cycle of 0.1 (10%) or 0.2 (20%). Thus, in the normal mode, RF Amplifier 105, Mixer 110 and Local Oscillator 115 operate about 50 percents of time, and in the stand-by mode only 10 or 20 percents. Therefore, in the stand-by mode, more power is saved. It should be noted that when operating in the stand-by node, RF Amplifier 105, Mixer 110 and Local Oscillator 115 still operate with a predefined duty cycle (although it can be relatively small) in order to be able to receive, when required, a corresponding signal from said Control Unit 225 to start operating in the normal mode. For setting Control Unit 225 to the normal or stand-by mode, the user sends a corresponding FM mode-changing signal to FM receiver 200 (Fig. 2) by means of his transmitter (not shown). Then, said signal is received at the FM receiver by means of antenna 102. The signal may have, for example, a low frequency of 100 or 150 Hz that does not interfere with audio signals (e.g., human speech, etc.) that are also received by means of said antenna 102, said audio signals are typically in the range from 200 Hz (Hertz) to 8 KHz (KiloHertz). For changing the RF receiver state to the stand-by mode, the mode-changing signal may have, for example, a frequency of 100 Hz, and for changing the state to the normal mode - 150 Hz. The mode-changing signal is determined by means of Demodulator 130 and the corresponding command is sent to Control Unit 225, instructing said Control Unit 225 to change the operating mode. In this way, the user may set FM receiver 200 to the stand-by mode in order to save the battery energy.

According to an embodiment of the present invention, for starting operation in the normal mode (after operating in the stand-by mode), no synchronization between FM receiver 200 (Fig. 2) and a transmitter (not shown) is required. This is due to the fact that the radio frequency signal is continuously received by means of antenna 102 (Fig. 2) (and further processed by means of RF amplifier 105 (Fig. 2), Mixer 110 (Fig. 2), IF filter 120 (Fig. 2), IF amplifier/clipper 125 (Fig. 2), Demodulator 130 (Fig. 2), etc.), and the mode-changing signal sent by means of the transmitter to Control Unit 225, instructing said Control Unit to change the operation mode (from the normal mode to stand-by mode and vice-versa), is long enough to enable FM receiver 200 to detect said signal by means of Demodulator 130 (Fig. 2) and separate it from other signals, such as the noise or audio data signals. Each mode-changing signal can typically last 10 cycles. For example, if the signal has the frequency of 100 Hz; i.e., each cycle of $\dfrac{1}{100Hz} = 0.01\sec onds$, then it should last for 10·0.01 sec*onds* = 0.1sec*onds*. Thus, FM receiver 200 is always synchronized to the transmitter.

According to an embodiment of the present invention, a designer (e.g., electronics engineer) of FM receiver 200 and/or user of said FM receiver 200 sets a dutycycle of the power supply and the switching signals received from Control Unit 225 (Fig. 2) according to the following considerations: as the duty cycle increases, the quality of data (such as audio data) outputted by Demodulator 130 (Fig. 2) also increases, but the power supply saving decreases; and as the duty cycle decreases, the quality of data outputted by Demodulator 130 also decreases, but the power supply saving increases.

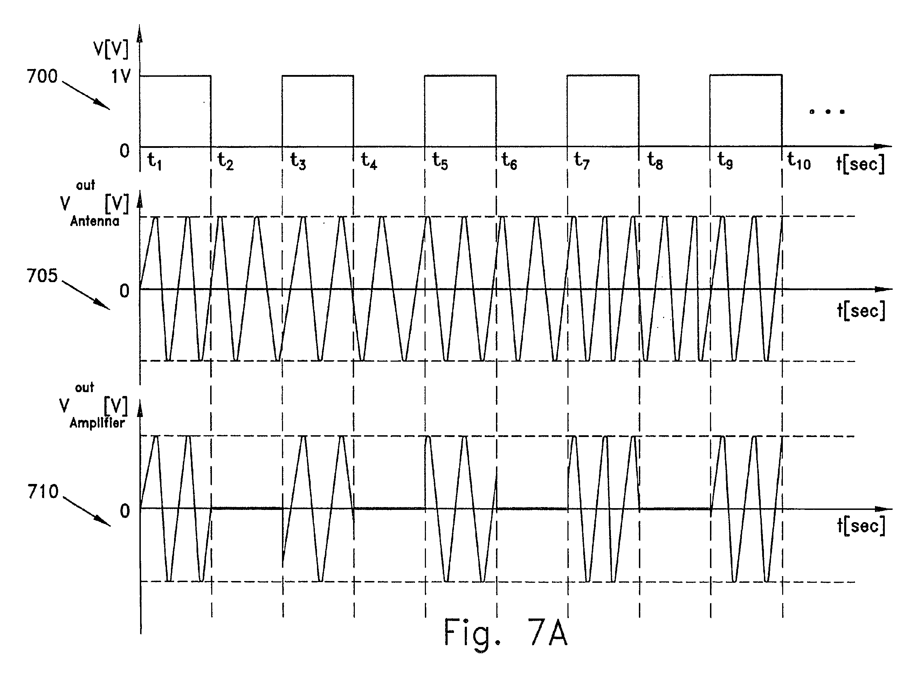

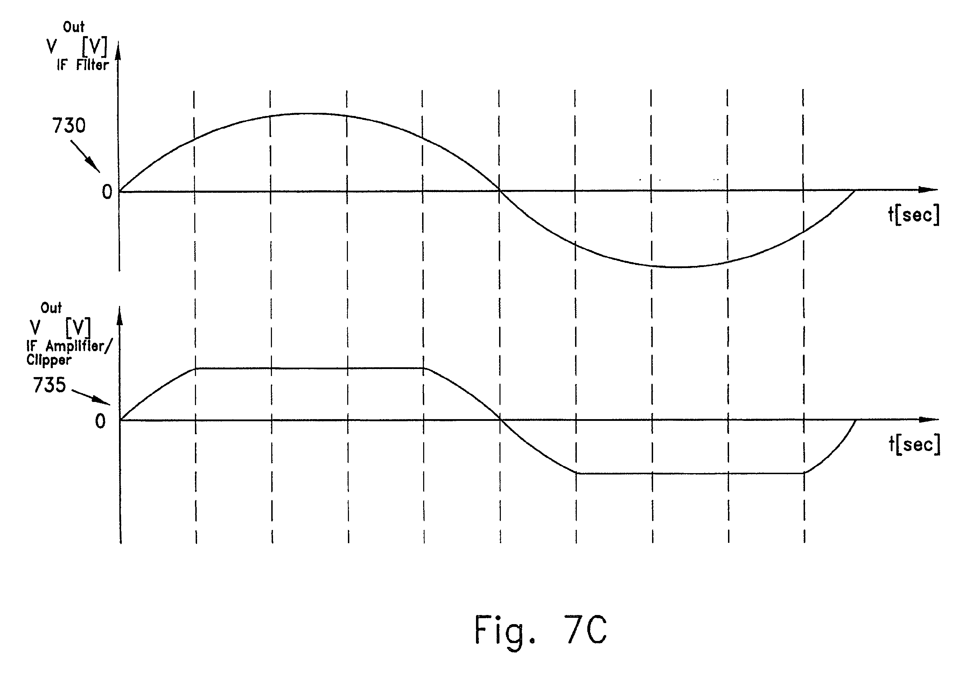

Fig. 7A to Fig. 7C are schematic illustrations of sample input/output signals within FM receiver 200 (Fig. 2), according to an embodiment of the present invention. Graph 700 illustrates a power supply signal that is supplied by means of Control Unit 225 to all electronic units/ components within said FM receiver 200, such as RF amplifier 105, Mixer 110, etc. It is supposed, for example, that FM receiver 200 operates in the normal mode with duty cycle of 0.5 (50%). The amplitude of said power supply signal may be, for example, 1 Volt. Graph 705 illustrates a conventional FM signal $V_{Antenna}^{out}\,[V]$ that is received by antenna 102 (Fig. 2) and outputted to switched RF amplifier 105 (Fig. 2). It should be noted that the received FM signal may have low amplitude, such as -100 dB (decibels). Switched RF amplifier 105 amplifies the received signal and outputs a resultant signal $V_{Amplifier}^{out}\,[V]$, represented on graph 710, to Mixer 110 (Fig. 2). As is seen from said graph 710, at time periods $t_2$ to $t_3$, $t_4$ to $t_5$, $t_6$ to $t_7$, $t_8$ to $t_9$, etc. RF amplifier 105 is switched OFF and its output voltage is substantially zero. Graph 715 represents an output voltage signal $V_{Oscillator}^{out}\,[V]$ generated by Local Oscillator 115 (Fig. 2). Mixer 110 mixes corresponding signals from said switched RF amplifier 105 and said Local Oscillator 115, and generates an output signal $V_{Mixer}^{out}\,[V]$, such as

the one presented on graph 720. The signal is outputted from point E shown on Fig. 5. As is seen from said graph 720, at the time periods $t_2$ to $t_3$, $t_4$ to $t_5$, $t_6$ to $t_7$, $t_8$ to $t_9$, etc. an amplitude of the signal $V_{Mixer}^{out}\,[V]$ illustrated on said graph is substantially zero due to switching of said RF amplifier 105, Mixer 110 and Local Oscillator 115 by means of Control Unit 225 (Fig. 2). Graphs 725 and 730 represent input and output signals $V_{IF\,Filter}^{in}\,[V]$ and $V_{IF\,Filter}^{out}\,[V]$, respectively, to and from said IF Filter 120 (Fig. 2). Capacitor $C_{M2}$ (Fig. 2) in addition to storing the last operating point (voltage value) of Mixer 110, stores the last value of signal $V_{Mixer}^{out}\,[V]$ outputted from said Mixer 110. In this way, when analog switch $S_{M2}$ (Analog switch 211, as shown on Fig. 2) is open (switched OFF), the signal $V_{IF\,Filter}^{In}\,[V]$ inputted to IF filter 120 is kept at its last value. For example, if at time period $t_2$ the amplitude of signal $V_{IF\,Filter}^{In}\,[V]$ is 1 Volt, then at the period between $t_2$ and $t_3$ when the voltage value at point E is substantially zero (Fig. 5), the amplitude of said signal $V_{IF\,Filter}^{In}\,[V]$ remains substantially 1 Volt due to providing said capacitor $C_{M2}$. Signal $V_{IF\,Filter}^{out}\,[V]$ is further amplified and clipped to signal $V_{IFAmplifier\,/\,Clipper}^{out}\,[V]$, as shown on graph 735 on Fig. 7C, by means of IF Amplifier/Clipper 125 (Fig. 2) to be further demodulated and played by Speaker 135 (Fig. 2).

While some embodiments of the invention have been described by way of illustration, it will be apparent that the invention can be put into practice with many modifications, variations and adaptations, and with the use of numerous equivalents or alternative solutions that are within the scope of persons skilled in the art, without departing from the spirit of the invention or exceeding the scope of the claims.

The invention relates to a low power radio frequency receiver which comprises: (a) an antenna for receiving a first radio frequency signal; (b) a radio frequency amplifier for amplifying the first radio frequency signal received by said antenna; (c) an oscillator for generating a second radio frequency signal having a predefined frequency and a predefined duty cycle to be mixed with said first radio frequency signal received by said antenna; (d) a mixer for mixing the first amplified radio frequency signal with second radio frequency signals and generating a third radio frequency signal; (e) an intermediate frequency filter for passing one or more intermediate frequencies of said third radio frequency signal and attenuating other frequencies of said third signal that are lower or higher than its cutoff frequencies, characterized in that it further comprises: (f) one or more switches for periodically and synchronously switching ON and OFF one or more of said radio frequency amplifier, said oscillator, and said mixer, said switches controlled by means of a control signal having a frequency that is higher than the frequency of data embedded within said first radio frequency signal; and (g) a control unit located within said radio frequency receiver for providing said control signal, wherein each of said switches is connected to a corresponding capacitor within said radio frequency amplifier, or oscillator, or mixer, said capacitor storing an operating point of said radio frequency amplifier, or oscillator, or mixer when said radio frequency amplifier, or oscillator, or mixer is switched OFF.

**Claims**

1. A low power radio frequency receiver, comprising:

   a. an antenna for receiving a first radio frequency signal;
   b. a radio frequency amplifier for amplifying the first radio frequency signal received by said antenna;
   c. an oscillator for generating a second radio frequency signal having a predefined frequency and a predefined duty cycle to be mixed with said first radio frequency signal received by said antenna;
   d. a mixer for mixing the first amplified radio frequency signal with the second radio frequency signal and generating a third radio frequency signal;
   e. an intermediate frequency filter for passing one or more intermediate frequencies of said third radio frequency signal and attenuating other frequencies of said third signal that are lower or higher than its cutoff frequencies,
   **characterized in that** it further comprises:
   f. one or more switches for periodically and synchronously switching ON and OFF one or more of said radio frequency amplifier, said oscillator, and said mixer, said switches are controlled by means of a control signal having a frequency that is higher than the highest frequency of data embedded within said first radio frequency signal; and
   g. a control unit located within said radio frequency receiver for providing said control signal,

   wherein each of said switches is connected to a corresponding capacitor within said radio frequency amplifier, or oscillator, or mixer, said capacitor storing an operating point, respectively, of said radio frequency amplifier, or oscillator, or mixer when said radio frequency amplifier, or oscillator, or mixer is switched OFF.

2. Receiver according to claim 1, wherein whenever the oscillator is a crystal oscillator, the crystal of said oscillator is further connected to a switch that is periodically switched ON and OFF for maintaining continuous vibrations of said crystal and storing within it the energy of said vibrations for continuously generating the second radio frequency signal substantially at the predefined radio frequency.

3. Receiver according to claim 1, further comprising a switch connected to an output of the mixer for periodically switching ON and OFF a capacitor which is also connected to said switch, said capacitor storing the last value of the third signal outputted from said mixer and storing the operating point of said mixer when said mixer is switched OFF, and said capacitor being synchronously switched ON and OFF with the switching of one or more of the radio frequency amplifier, oscillator and mixer.

4. Receiver according to claim 1, wherein the control unit provides a power supply signal to one or more units within said receiver.

5. Receiver according to claim 4, wherein the frequency of the control signal is substantially equal to a frequency of the power supply signal.

6. Receiver according to claim 4, wherein a duty cycle of the control signal is substantially equal to a duty cycle of the power supply signal.

7. Receiver according to claim 1, further comprising an intermediate frequency amplifier for amplifying a fourth radio frequency signal outputted by the intermediate frequency filter.

8. Receiver according to claim 7, further comprising one or more switches for periodically and synchronously switching ON and OFF said intermediate frequency amplifier.

9. Receiver according to claim 1, further comprising a clipper for clipping a fourth radio frequency signal outputted by the intermediate frequency filter.

10. Receiver according to claim 1, further comprising a demodulator for demodulating data contents from a fourth signal outputted by the intermediate frequency filter.

11. Receiver according to claim 9, further comprising or further connected to a speaker, into which the demodulated data signal is provided.

**12.** Receiver according to claim 10, wherein the demodulated data signal is an audio data signal.

**13.** Receiver according to claim 1, being a unit of a hearing aid device.

**14.** Receiver according to claim 1, which is a miniature integrated circuit.

**15.** Use of the receiver according to claim 1, in a hearing aid device.

**16.** Receiver according to claim 1, which has normal and stand-by modes.

**17.** Receiver according to claim 1, which is externally set to a normal or stand-by mode by receiving one or more mode-changing radio frequency signals from a transmitter.

**18.** Receiver according to claim 4 and 16, wherein upon receipt of the one or more mode-changing radio frequency signals by means of the receiver, the control unit changes a duty cycle of the power supply and control signals.

**19.** Receiver according to claim 4 and 16, wherein upon receipt of the one or more mode-changing radio frequency signals by means of the receiver, the control unit changes a frequency of the power supply and control signals.

**20.** Receiver according to claim 4, wherein a duty cycle of the control and power supply signals are externally set by means of a user by sending to the receiver one or more corresponding radio frequency signals.

**21.** Receiver according to claim 4, wherein the frequency of the control and power supply signals provided to the oscillator differs from the frequency of the control and power supply signals provided to other units within said receiver.

**22.** Receiver according to claim 4, wherein a duty cycle of the control and power supply signals provided to the oscillator differs from a duty cycle of the control and power supply signals provided to other units within said receiver.

**23.** Receiver according to claim 1, substantially as described and illustrated.

Fig. 1
Prior Art

EP 1 944 873 A2

Fig. 2

EP 1 944 873 A2

105

## Switched RF Amplifier

Control signal
from Control Unit

$C_{A1}$

$S_{A1}$

A

$V[V]$

1V

0

$t_1$ $t_2$ $t_3$ $t_4$ $t_5$ $t_6$  $t[sec]$

1nF

$R_{A1}$ 10kΩ

Power supply
signal from
Control Unit

Gnd.

$R_{A3}$ 100kΩ

$R_{A4}$
5kΩ

Output
to Mixer

102

$C_{A3}$

$T_{A1}$

B

Control signal
from Control Unit

$S_{A2}$

$R_{A2}$
0.5kΩ

1nF

$C_{A2}$

Gnd.

## Fig. 3

118

## Crystal-equivalent electronic circuit of a switched Local Oscillator

Fig. 4

110

Switched Mixer connected to a
capacitor $C_{M2}$

Fig. 5

Normal Mode | Stand-by Mode | Normal Mode

Fig. 6

Fig. 7A

EP 1 944 873 A2

Fig. 7B

EP 1 944 873 A2

Fig. 7C

EP 1 944 873 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5447489 A

**Non-patent literature cited in the description**

- **ARMIN DEISS.** A Low Power 200 MHz Receiver for Wireless Hearing Aid Systems. *Symposium on VLSI Circuits Digest of Technical Papers,* 2002